(19) **Europäisches Patentamt**
**European Patent Office**
**Office européen des brevets**

(11) **EP 1 976 306 B1**

(12) **EUROPEAN PATENT SPECIFICATION**

(45) Date of publication and mention of the grant of the patent:
**31.05.2017 Bulletin 2017/22**

(51) Int Cl.:
***H04N 13/04*** *(2006.01)*

(21) Application number: **08102780.7**

(22) Date of filing: **19.03.2008**

(54) **Stereoscopic displaying apparatus**

Stereoskopische Anzeigevorrichtung

Appareil d'affichage stéréoscopique

(84) Designated Contracting States:
**FR GB**

(30) Priority: **30.03.2007 US 693725**

(43) Date of publication of application:
**01.10.2008 Bulletin 2008/40**

(73) Proprietor: **ARISAWA MFG. CO., LTD.**
**Joetsu-shi,**
**Niigata 943-8610 (JP)**

(72) Inventors:
• **Kuroda, Mikio,**
**c/o ARISAWA MFG. CO., LTD.**
**Niigata, Niigata 943-8610 (JP)**

• **Sato, Tatsuya,**
**c/o ARISAWA MFG. CO., LTD.**
**Niigata, Niigata 943-8610 (JP)**

(74) Representative: **Tetzner, Michael et al**
**TETZNER & PARTNER mbB**
**Patent- und Rechtsanwälte**
**Van-Gogh-Strasse 3**
**81479 München (DE)**

(56) References cited:
**JP-A- 4 016 092     US-A- 5 956 001**
**US-A- 6 046 787**

**Description**

The present invention relates to a stereoscopic displaying apparatus. Particularly, the present invention relates to a stereoscopic displaying apparatus that reduces cross talk of right and left image lights.

US 5,956,001 A discloses a stereoscopic displaying apparatus, comprising:

a) an image generating section having a right eye image generating region on which a right eye image light is generated and a left eye image generating region on which a left eye image light is generated, said image generation section further comprising a color filter arranged corresponding to the right and left image generating regions and transmitting light having a particular wavelength,

b) a polarizing plate that emits the right eye image light and the left eye image light generated by the image generating section in the same polarizing direction,

c) a polarization axis control plate including a right eye polarizing region and an adjacent left eye polarizing region on which the right eye image light and the left eye image light from the polarizing plate are incident, respectively, and from which the right eye image light and the left eye image light are emitted as linear polarized lights of which polarization axes are orthogonalized to each other or as circularly polarized lights of which polarization axes are rotated in directions opposite to each other, and

d) a plurality of light blocking sections for blocking the right and left eye image light and a plurality of apertures formed between said light blocking sections and transmitting therethrough the right and left eye image light.

With this known device according to US 5,956,001 A the light blocking sections (black matrix) are provided between the elements of the color filter. This black matrix is formed in a lattice shape with each mesh surrounding each pixel.

Viewing from a position off the center line at the center of the vertical direction of the stereoscopic displaying apparatus, cross talk may occur such that a part of the right eye image generated by a liquid-crystal display panel is transmitted to the left eye of the viewer through a quarter wave retarder for the left eye.

Accordingly, it is the object of the invention to provide a stereoscopic displaying apparatus which is capable of solving the above-mentioned problem. This object is solved by the features of claim 1. Dependent claims thereof specify preferable embodiments of the invention.

Fig.1 is an exploded perspective view showing a stereoscopic displaying apparatus 100 being a part of a stereoscopic image displaying system 10 according to an embodiment;

Fig.2 is a schematic top view showing a usage state of the stereoscopic image displaying system 10;

Fig.3 is a side view explaining in detail an image generating section 160, a polarizing plate 170 and a polarization axis control plate 180 in the stereoscopic displaying apparatus 100;

Fig.4 is a partially enlarged view of Fig.3 to explain light blocking sections 190;

Fig.5 shows a measuring result of cross talk rate C ($\theta$); and

Fig.6 is an exploded perspective view showing a stereoscopic displaying apparatus 101.

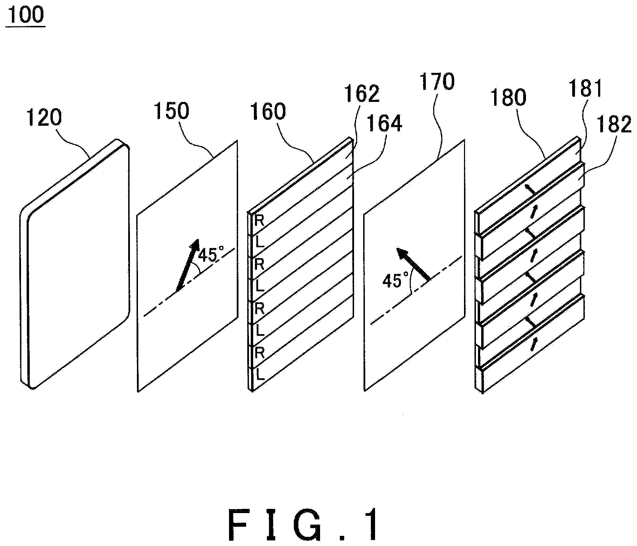

Fig.1 is an exploded perspective view showing a stereoscopic displaying apparatus 100 being a part of a stereoscopic image displaying system according to the present embodiment. The stereoscopic image displaying system according to the present embodiment includes the stereoscopic displaying apparatus 100 and a polarized eye glasses. As shown in Fig.1, the stereoscopic displaying apparatus 100 includes a light source 120, a polarizing plate 150, an image generating section 160, a polarizing plate 170 and a polarization axis control plate 180 in the described order, and those are accommodated in a housing (not shown in the figure). A viewer views a stereoscopic image displayed on the stereoscopic displaying apparatus 100 from the right side of the polarization axis control plate 180 shown in Fig.1.

The light source 120 is arranged on the innermost of the stereoscopic displaying apparatus 100 from the viewpoint of the viewer and emits a white non-polarized light to one surface of the polarizing plate 150 in using the stereoscopic displaying apparatus 100. Here, the light source 120 is a surface illuminant in the present embodiment, however, the light source 120 may be a combination of such as a point light source and a condenser lens instead of the surface illuminant. An example of condenser lens is a Fresnel lens.

The polarizing plate 150 is provided on the image generating section 160 at the light source 120 side. The polarizing plate 150 has a transmission axis and a absorption axis orthogonalizied to the transmission axis, and when non-polarized light emitted from the light source 120 is incident thereon, transmits light having the polarization axis in parallel with the transmission axis direction among the non-polarized light but blocks light having the polarization axis in parallel with the absorption axis direction. Here, the polarization axis direction is a direction to which light oscillates in the electric field. The transmission axis direction of the polarizing plate 150 is the direction toward the upper right having the angle of 45 degrees with the horizontal direction when the viewer views the stereoscopic displaying apparatus 100 shown as an arrow in Fig.1.

The image generating section 160 has right eye image generating regions 162 and left eye image generating regions 164. Each of the right eye image generating regions 162 and the left eye image generating regions 164 are obtained by dividing the image generating section 160 by the horizontal direction, and a plurality of right eye image generating regions 162 and left eye image generating regions 164 are alternately arranged in the vertical direction as shown in Fig.1. In using the stereoscopic displaying apparatus 100, a right eye image is generated in each right eye image generating region 162 and a left eye image is generated in each left eye image generating region 164 in the image generating section 160, respectively. At this time, light transmitted through the polarizing plate 150 is incident on the right eye image generating region 162 and the left eye image generating region 164 in the image generating section 160, and then, the light transmitted through the right eye image generating region 162 becomes an image light of the right eye image (hereinafter referred to as a right eye image light) and the light transmitted through the left eye image generating region 164 becomes an image light of the left eye image (hereinafter referred to as a left eye image light). Here, each of the right eye image light transmitted through the right eye image generating region 162 and the left eye image light transmitted through the left eye image generating region 164 are linearly polarized light having the polarization axis in a specified direction. Here, each of the polarization axis in the specified direction may be in the same direction each other. For example, each polarization axis is in the direction the same as that of the transmission axis of the polarizing plate 170 described later as shown in Fig.1. In such image generating section 160, a plurality of small cells are arranged in a matrix in a plane in the horizontal direction and the vertical direction, for example, and a LCD (liquid crystal display) in which liquid crystal is sealed in each cell sandwiched between oriented films is used. Each cell is electrically driven in the LCD, so that each cell switches between a state that the light is transmitted therethrough without changing the direction of the polarization axis and a state that the light is transmitted therethrough with rotating the direction of the polarization axis by 90 degrees. The right eye image generating region 162 and the left eye image generating region 164 may be alternately arranged per cell, or alternately arranged for each of the predetermined number of cells in the vertical direction.

The polarizing plate 170 is provided in the image generating section 160 on the viewer side. When the right eye image light transmitted through the right eye image generating region 162 and the left eye image light transmitted through the left eye image generating region 164 are incident thereon, the polarizing plate 170 transmits the light of which polarization axis is in parallel with the transmission axis but blocks the light of which polarization axis is in parallel with the absorption axis among the incident lights. Here, the direction of the transmission axis of the polarizing plate 170 is 45 degrees upper left direction from the horizontal direction when the viewer views the stereoscopic image display section 100 shown as the arrow in Fig.1.

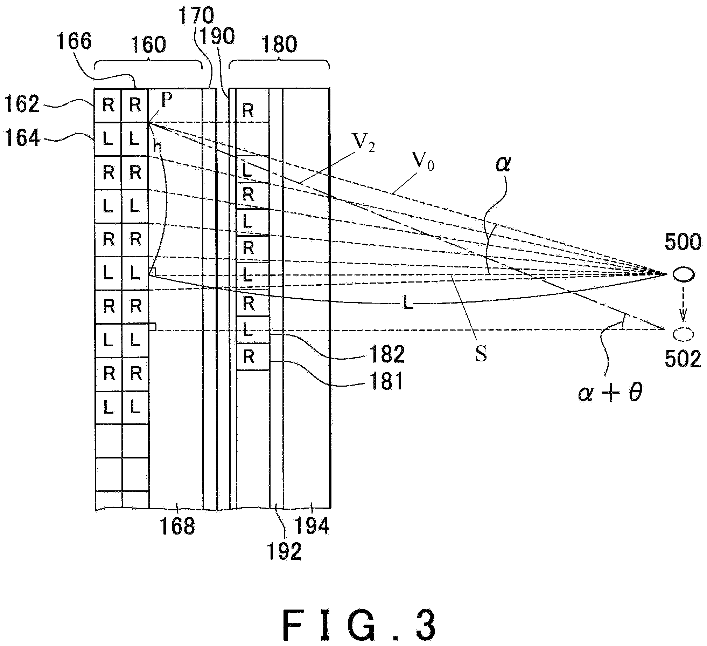

The polarization axis control plate 180 includes first polarizing regions 181 and second polarizing regions 182. The size and the position for each of the right eye polarizing regions 181 and each of the left eye polarizing regions 182 in the polarization axis control plate 180 are arranged such that the right eye image light transmitted through the right eye image generating region 162 is incident on the right eye polarizing region 181 and the left eye image light transmitted through the left eye image generating region 164 is incident on the left eye polarizing region 182 when the stereoscopic displaying apparatus 100 is viewed from the central position of the front by a predetermined viewing distance. The size and the position for each of the right eye polarizing region and the left eye polarizing region will be described in detail later with reference to Fig.3.

The right eye polarizing region 181 does not rotate the polarization axis of the incident right eye image light but directly transmits therethrough. Meanwhile, the left eye polarizing region 182 rotates the polarization axis of the incident left eye image light to the direction orthogonalized to the polarization axis of the right eye image light incident on the right eye polarizing region 181. Therefore, the direction of the polarization axis of the right eye image light transmitted through the right eye polarizing region 181 and that of the polarization axis of the left eye image light transmitted through the left eye polarizing region 182 are orthogonalized to each other shown as the arrows in Fig.1. Here, the arrows of the polarization axis control plate 180 shown in Fig.1 indicate the polarization axes of the polarized light transmitted through the polarization axis control plate 180. A transparent glass or resin is used for each right eye polarizing region 181, and a half wave retarder having an optical axis having the angle of 45 degrees with the direction of the polarization axis of the incident left eye image light is used for each left eye polarizing region 182, for example. The direction of the optical axis of the left eye polarizing region 182 is the horizontal direction or the vertical direction in the embodiment shown in Fig.1. Here, the optical axis means either the phase advance axis or the phase delay axis when light is transmitted through the left eye polarizing region 182.

In addition, the stereoscopic displaying apparatus 100 may have a diffuser panel that diffuses the right eye image light and the left eye image light transmitted through the right eye polarizing region 181 and the left eye polarizing region 182 in at least one direction of the horizontal direction or the vertical direction on the viewer side, i.e. the right side of the polarization axis control plate 180 in Fig.1. For such diffuser panel, a lenticular lens sheet on which plurality of convex lenses (cylindrical lenses) are extended in the horizontal direction or the vertical direction, or a lens array sheet on which a plurality of convex lenses are arranged on a plane is used, for example.

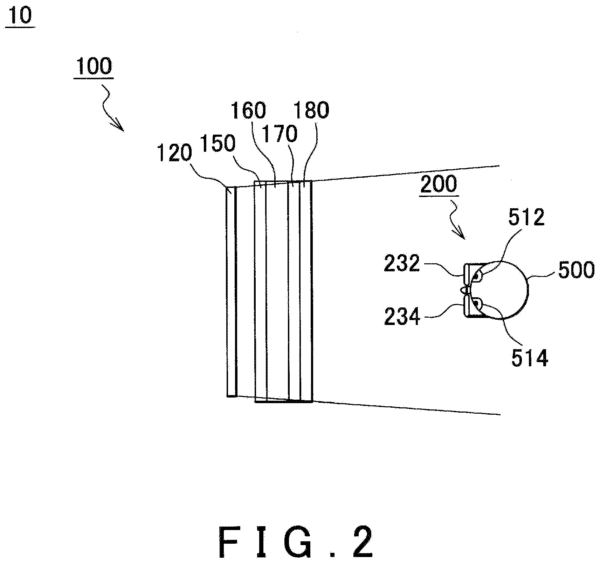

Fig.2 is a schematic top view showing a usage state of the stereoscopic image displaying system 10. Viewing a stereoscopic image by the stereoscopic image displaying system 10, the viewer 500 views the right eye image light and the left eye image light projected from the stereoscopic displaying apparatus 100 with a polarized glasses 200 as shown in Fig.2. When the viewer 500 wears the polarized glasses 200, a right eye image transmitting section 232 is disposed at the position for a right eye 512 side and a left eye image transmitting section 234 is disposed at the position for a left eye 514 side of the viewer 500.

The right eye image transmitting section 232 is a polarizing plate of which transmission axis direction is the same as that of the right eye image light transmitted through the right eye polarizing region 181 and of which absorption direction axis is orthogonalized to the transmission axis direction. Meanwhile, the left eye image transmitting section 234 is a polarizing plate of which transmission axis direction is the same as that of the left eye image light transmitted through the left eye polarizing region 182 and of which absorption direction axis is orthogonalized to the transmission axis direction. For each of the right eye image transmitting section 232 and the left eye image transmitting section 234, a polarizing lens to which a polarizing film obtained by uniaxially drawing a film impregnating dichromatic dye is attached is used, for example.

Viewing a stereoscopic image by the stereoscopic image displaying system 10, the viewer 500 views the stereoscopic displaying apparatus 100 with the polarized glasses 200 as described above within a range in which the right eye image light and the left eye image light transmitted through the right eye polarizing region 181 and the left eye polarizing region 182, respectively in the polarization axis control plate 180 are emitted, so that the right eye 512 can view only the right eye image light and the left eye 514 can view only the left eye image light. Therefore, the viewer 500 can perceive the right eye image light and left eye image light as a stereoscopic image.

Fig.3 is a side view explaining in detail the image generating section 160, the polarizing plate 170 and the polarization axis control plate 180. Here, the thickness of each component is exaggerated for explanation. In addition, lower half is omitted for ease of explanation.

As shown in Fig.3, the image generating section 160 includes the right eye image generating regions 162, the left eye image generating regions 164, color filter 166 arranged corresponding to the right eye image generating regions 162 and the left eye image generating regions 164 that transmits therethrough light having a particular wavelength, and a glass substrate 168 that supports the right eye image generating regions 162, the left eye image generating regions 164 and the color filter 166. The polarizing plate 170 is supported by the glass substrate 168 on the viewer side opposite to the side on which the color filter is provided. Here, it is preferred that the surface of the polarizing plate 170 facing the polarization axis control plate 180 is smooth.

Moreover, the polarization axis control plate 180 has the light blocking sections 190, the right eye polarizing regions 181 and the left eye polarizing regions 182, an orientation section 192 and a glass substrate 194 from the side facing the polarizing plate 170 toward the viewer 500 side. Here, the right eye polarizing regions 181 and the left eye polarizing regions 182 may be liquid crystal, for example. The right eye polarizing regions 181 and the left eye polarizing regions 182 are oriented in accordance with the orienting direction of the orientation section 192 to have a function as the half wavelength retarder.

The right eye polarizing regions 181 and the left eye polarizing regions 182 are arranged so as not to occur any cross talk when the viewer 500 views the right eye image light and the left eye image light emitted from the right eye image generating region 162 and the left eye image generating region 164 of the image generating section 160 at a specified position. The specified position may be the center of the vertical direction of the stereoscopic displaying apparatus 100, i.e. the position of viewer 500 is separated from the stereoscopic displaying apparatus 100 by a predetermined viewing distance L on the center line S, for example. As shown in Fig.3 (see the dashed lines), the right and left eye polarizing regions 181 and 182 are displaced in the vertical direction relative to the corresponding right and left eye image generating regions 162 and 164 so that light from right eye image generating region 162 passes right eye polarizing region 181 and vice versa (see line $V_0$ running from point P to the viewer 500 in the central position). Here, $\alpha$, expressed by $\alpha=\tan^{-1}(h/L)$, is the central elevation angle of a set of adjacent right and left eye image generating regions 162, 164 located in a distance h from the center line S of the stereoscopic displaying apparatus 100, as seen by a viewer 500 on the center line S in the viewing distance L from the stereoscopic displaying apparatus (100).

If, however, a viewer 502 has an elevation angle $(\theta+\alpha)$ a cross talk occurs as a part of the right eye image light from the right eye image generating region 162 is transmitted to the viewer 502 through the left eye polarizing region 182 of the polarization axis control plate 180 as shown by the alternate long and short dash line $V_2$ of Fig.3. To avoid this cross talk the polarization axis control plate 180 has light blocking sections 190 arranged on the surface facing the polarizing plate 170 that block the right eye image light and the left eye image light in the present embodiment.

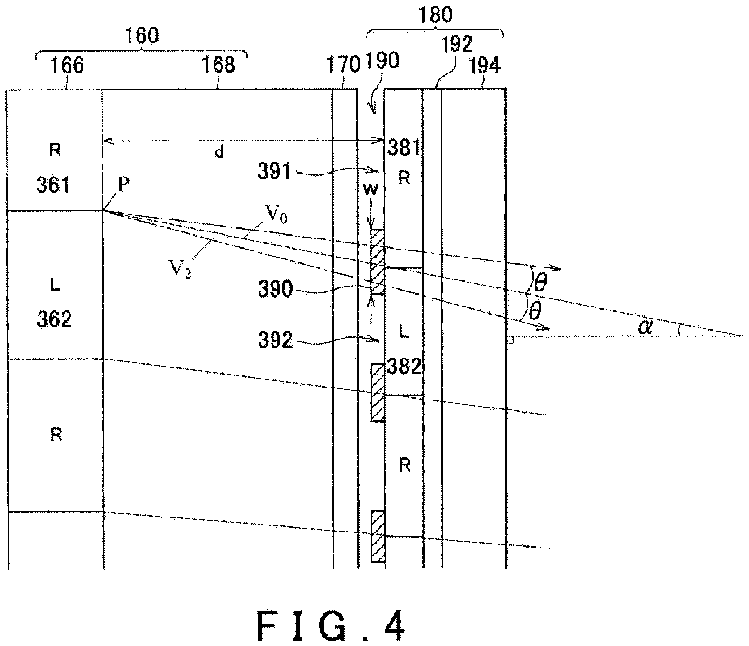

Fig.4 is a partially enlarged view of Fig.3 to explain light blocking sections 190. As shown in Fig.4, a plurality of light blocking sections 190 extending in the horizontal direction are arranged on the surface of the polarization axis control plate 180 which faces the polarizing plate 170. In Fig.4 a right eye image generating region 361 and a left eye image generating region 362 are any adjacent one set of the right eye image generating regions 162 and the left eye image generating regions 164 of Fig.3. In the same way, a right eye polarizing region 381 and a left eye polarizing region 382 of Fig.4 are any one set of the right eye polarizing regions 181 and the left eye polarizing regions 182 of Fig.3. These right and left eye polarizing regions 381 and 382 correspond to the right and left eye image generating regions 361 and 362. A light blocking section 390 of Fig.4 (being one of the light blocking sections 190 of Fig.3) is the boundary between the right eye image generating region 361 and the left eye image generating region 362.

As shown in Fig.4, the light blocking section 390 having the width w in the vertical direction is provided between the right eye polarizing region 381 and the left eye polarizing region 382. An aperture 391 and an aperture 392 through which the image light of the right eye polarizing region 381 and the image light of the left eye polarizing region 382 are transmitted, respectively are arranged on both sides of the light blocking section 390.

In Fig. 4 (same as in Fig.3) the dashed line $V_0$ (with the elevation angle $\alpha$) runs from point P (at the boundary between right and left image generating regions 361, 362) to a viewer 500 in the central position. Line $V_2$ (with an elevation angle $(\theta+\alpha)$ runs from P to a viewer 502.

Here, the width w of the light blocking section 390 is set so as image light directed from the boundary (point P) between adjacent right and left image generating regions 361, 362 within an angle of $\pm\theta$ with respect to $\alpha$ is blocked by a light blocking section 390, so that image light emitted from the left eye image generating region 362 and incident on the aperture 392 adjacent to light blocking section 390 is viewed by the left eye of the viewer 502, whereas image light emitted from the right eye image generating region 361 and incident on said aperture 392 is not viewed by the left eye of the viewer 502, and vice versa. Therefore, the width w of the light blocking section 390 satisfies geometrically the following expression (1), where d is the distance between the color filter 166 and the right eye polarizing region 181.

$$w = d * (\tan(\alpha+\theta)\text{-}\tan(\alpha\text{-}\theta)) \qquad (1)$$

Here, since diffraction phenomenon may occur in the image light, the width w of the light blocking section 390 may be somewhat larger than the expression (1), or somewhat smaller than that in order to increase the numerical aperture.

When the viewer views the stereoscopic displaying apparatus 100 within an elevation angle $\pm(\alpha+\theta)$, cross talk due to that the right eye image is incident on the left eye polarizing region and viewed by the left eye, and vice versa, is difficult to occur.

Each of the light blocking sections 190 is formed by screen printing. Here, it is preferred that the light blocking section 190 is formed of material obtained by dispersing filer components in a binder resin, for example. The filer components may be metal particles and the oxide thereof, or pigment and dye. It is preferred that the color tone of the filer components is black for the right eye image light and the left eye image light emitted from the image generating section 160. The binder resin in which the pigment and the dye are dispersed or dissolved may be a well-known resin such as acrylic resin, urethane resin, polyester, novolac resin, polyimide, epoxy resin, chloroethylene/vinyl acetate copolymer, nitrocellulose or these combination.

Here, a light blocking section may be provided on the color filter 166 at the position corresponding to each boundary between the right eye image generating regions 162 and the left eye image generating regions 164. In this case, it is preferred that the image generating section 160, the polarizing plate 170 and the polarization axis control plate 180 have each value indicated by the following Table 1.

Table 1

| IMAGE GENERATING SECTION 160 | | | | VIEWING DISTANCE (mm) | POLARIZATION AXIS CONTROL PANEL 180 | |
|---|---|---|---|---|---|---|
| PIXEL PITCH (mm) | WIDTH OF LIGHT BLOCKING SECTION OF COLOR FILTER (mm) | THICKNESS OF GLASS (mm) | THICKNESS OF POLARIZING PLATE (mm) | | PIXEL PITCH (mm) | WITCH OF POLARIZING SECTION (mm) |
| 0.15~0.8 | 0.01~0.2 | 0.3~1.1 | 0.1~0.3 | 300~7000 | DETERMINE BASED ON EACH LEFT VALUE | 0.05~0.5 |

[Embodiment 1]

In the embodiment 1, the cross talk rate C($\theta$) defined by the following expressions (2)-(4) is measured by using the stereoscopic displaying apparatus 100 in which the image generating section 160, the polarizing plate 170 and the polarization axis control plate 180 have each value indicated by the following Table 2. In the same way, the cross talk rate $C(\theta)$ is measured by using the stereoscopic displaying apparatus 100 having the condition the same as that of the embodiment 1 except that the polarization axis control plate 180 does not have any light blocking section 190 as a comparative example 1.

Table 2

| IMAGE GENERATING SECTION 160 | | | | VIEWING DISTANCE (mm) | POLARIZATION AXIS CONTROL PANEL 180 | |
|---|---|---|---|---|---|---|
| PIXEL PITCH (mm) | WIDTH OF LIGHT BLOCKING SECTION OF COLOR FILTER (mm) | THICKNESS OF GLASS (mm) | THICKNESS OF POLARIZING PLATE (mm) | | PIXEL PITCH (mm) | WITCH OF POLARIZING SECTION (mm) |
| 0.51 | 0.03 | 0.7 | 0.2 | 1500 | 0.51 | 0.22 |

$$C(\theta) = (C_L(\theta)+C_R(\theta))/2 \qquad (2)$$

$$C_L(\theta) = (R_{wL}-B_L)/(L_{Wl}-B_L)\times 100\% \qquad (3)$$

$$C_R(\theta) = (L_{wR}-B_R)/(R_{wR}-B_R)\times 100\% \qquad (4)$$

Here, $B_L$ is the luminance when the left eye image light is viewed with the angle $\theta$ through the left eye image transmitting section 234 in a case that the right eye image light and the left eye image light are black. $L_{wL}$ is the luminance when the right eye image light and left eye image light are viewed with the angle $\theta$ through the left eye image transmitting section 234 in a case that the right eye image light is black and the left eye image light is white. $R_{wL}$ is the luminance when the right eye image light and left eye image light are viewed with the angle $\theta$ through the left eye image transmitting section 234 in a case that the right eye image light is white and the left eye image light is black. In the same way, $B_R$ is the luminance when the right eye image light and left eye image light are viewed with the angle $\theta$ through the right eye image transmitting section 232 in a case that the right eye image light and the left eye image light are black. $L_{wR}$ is the luminance when the right eye image light and left eye image light are viewed with the angle $\theta$ through the right eye image transmitting section 232 in a case that the right eye image light is black and the left eye image light is white.
$R_{wR}$ is the luminance when the right eye image light and left eye image light are viewed with the angle $\theta$ through the right eye image transmitting section 232 in a case that the right eye image light is white and the left eye image light is black.

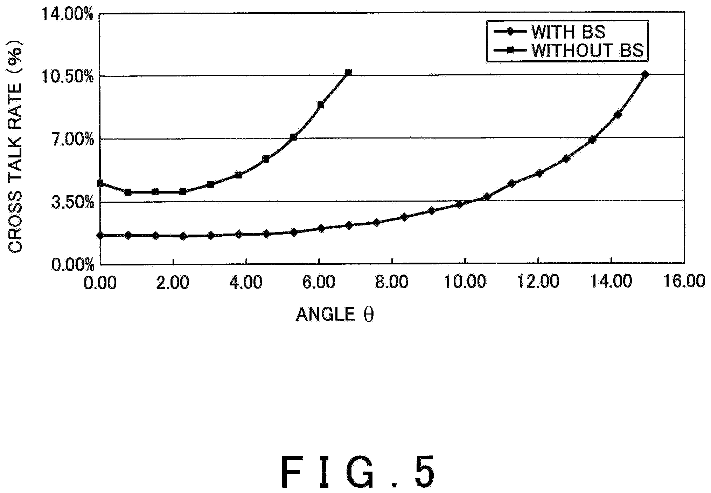

Fig.5 shows a measuring result of cross talk rate $C(\theta)$. In the legend of Fig.5 "BS" means light blocking section 190.
As shown in Fig.5, the larger the angle $\theta$ is increased, the higher the cross talk rate $C(\theta)$ is increased in the embodiment 1 and the comparative example 1. Here, for the same angle $\theta$, the cross talk rate $C(\theta)$ of the embodiment 1 is less than that of the comparative example 1. In addition, the best cross talk rate of the embodiment 1 is 1.5%, meanwhile the best cross talk rate of the comparative example 1 is 4%. Moreover, the cross talk rate $C(\theta)$ is equal to or less than 7% within $\pm$ 13.5 degrees of the angle of view $\theta$. Thereby it understands that the cross talk is reduced due to the light blocking sections 190.

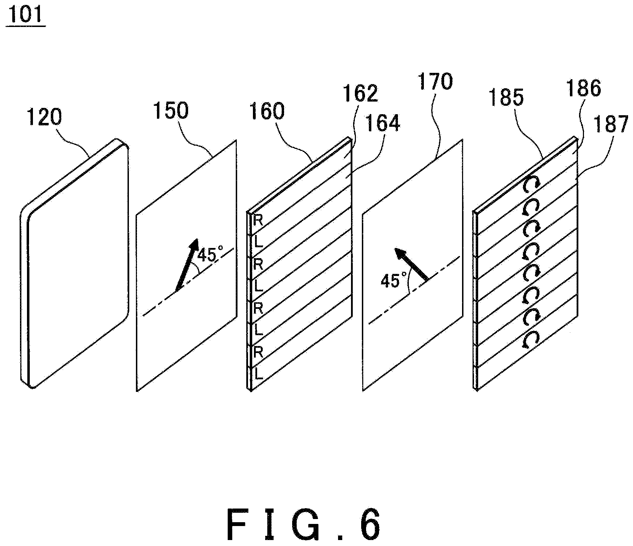

Fig.6 is an exploded perspective view showing a stereoscopic displaying apparatus 101. The components of the stereoscopic displaying apparatus 101 shown in Fig.6 the same as those of the stereoscopic displaying apparatus 100 shown in Fig.1 have the reference numerals the same as those of the components of the stereoscopic displaying apparatus 100, so that the description is omitted. As shown in Fig.6, the stereoscopic displaying apparatus 101 includes a polarization axis control plate 185 instead of the polarization axis control plate 180 of the stereoscopic displaying apparatus 100. The polarization axis control plate 185 includes right eye polarizing regions 186 and the left eye polarizing regions 187. Here, each of the right eye polarizing regions and the left eye polarizing regions is a quarter wave retarder, and the optical axis of each of them is orthogonalized to each other. The position and the size for each of the right eye polarizing region 186 and the left eye polarizing region 187 in the polarization axis control plate 185 are as described with reference to Fig.3 as well as each of the right eye polarizing region 181 and the left eye polarizing region 182 in the polarization axis control plate 180. Therefore, in using the stereoscopic displaying apparatus 101, the right eye image light transmitted through the right eye image generating region 162 is incident on the right eye polarizing region 186, and the left eye image light transmitted through the left eye image generating region 164 is incident on the left eye polarizing region 187.

The polarization axis control plate 185 shown in Fig.6 emits the incident lights as circularly polarized lights of which polarization axes are rotated in the directions opposite to each other. For example, the right eye polarizing region 186 emits the incident light as the clockwise circularly polarized light, and the left eye polarizing region 187 emits the incident light as the counterclockwise circularly polarized light. Here, the arrows of the polarization axis control plate 185 shown in Fig.6 indicate the rotating direction of each polarized light transmitted through the polarization axis control plate 185. For the right eye polarizing region 186, a quarter wave retarder of which optical axis is in the horizontal direction is used, and for the left eye polarizing region 187, a quarter wave retarder of which optical axis is in the vertical direction is used, for example.

Viewing the stereoscopic displaying apparatus 101 having the polarization axis control plate 185 shown in Fig.6, quarter wave retarders each of which optical axis is orthogonalized to each other are provided to the viewer 500 instead of the right eye image transmitting section 232 and the left eye image transmitting section 234 of the polarized glasses 200 shown in Fig.2. For example, the quarter wave retarder which is made of polycarbonate and of which optical axis is in the horizontal direction is used for the right eye phase shift plate. Meanwhile, the quarter wave retarder which is made of polycarbonate and of which optical axis is in the vertical direction is used for the left eye phase shift plate. In addition, the polarized glasses has polarizing plates each of which transmission axis direction is upper right at 45 degrees from the viewpoint of the viewer 500 and each of which absorption axis direction is orthogonalized to the transmission axis at the viewer side than the phase shift plate. Viewing the stereoscopic displaying apparatus 101 with the polarized glasses, the viewer 500 can view only the right eye image light by the right eye 512 and only the left eye image light by the left eye 514.

Also the stereoscopic displaying apparatus 101 shown in Fig.6 has the light blocking sections 190 shown in Fig.4, so that the right eye image light is prevented from being incident on the left eye polarizing region to reduce cross talk.

**Claims**

**1.**　A stereoscopic displaying apparatus (100), comprising:

　　a) an image generating section (160) having a plurality of right eye image generating regions (162, 361) through which incident light becomes a right eye image light and a plurality of left eye image generating regions (164, 362) through which incident light becomes a left eye image light, said right and left eye image generating regions (162, 164, 361, 362) being alternately arranged in the vertical direction, said image generation section (160) further comprising color filters (166) arranged corresponding to the right and left image generating regions (162, 164, 361, 362) and transmitting light having a particular wavelength,
　　b) a polarizing plate (170) that transmits a component of the right eye image light and a component of the left eye image light whose polarization axis is in parallel with a transmission axis of the polarizing plate (170) and blocks a component of the right eye image light and a component of the left eye image light whose polarization axis is in parallel with an absorption axis of the polarizing plate (170),
　　c) a polarization axis control plate including right eye polarizing regions (181, 381) and left eye polarizing regions (182, 382) on which the right eye image light and the left eye image light from the polarizing plate (170) are incident, respectively, and from which the right eye image light and the left eye image light are emitted as linear polarized lights of which polarization axes are orthogonalized to each other or as circularly polarized lights of which polarization axes are rotated in directions opposite to each other, said right and left eye polarizing regions (181, 182, 381, 382) being alternately arranged in the vertical direction, and
　　d) a plurality of light blocking sections (190, 390) extending in the horizontal direction for blocking the right and left eye image light and a plurality of apertures (391, 392) formed between said light blocking sections (190, 390) and transmitting therethrough the right and left eye image light,
　　**characterized in that**
　　e) said light blocking sections (190, 390) are arranged on a surface of the of the polarization axis control plate, which surface faces the polarizing plate (170) at a distance (d) being the distance between the color filters (166) and the right/left eye polarization regions (181, 182, 381, 382), each of the light blocking sections (190, 390) being provided at a boundary between a right eye polarizing region (181, 381) and an adjacent left eye polarizing region (182, 382), and
　　f) the width w in the vertical direction of each of the light blocking sections (190, 390) satisfies the equation

$$w = d * (\tan(\alpha+\theta)-\tan(\alpha-\theta)) \qquad (1),$$

wherein

d is said distance between the color filters (166) and the right/left eye polarization regions (181, 182, 381, 382),

$\alpha$ is that elevation angle of a set of adjacent right and left eye image generating regions (162, 164, 361, 362) corresponding to the respective light blocking section (190, 390), as seen by a viewer (500) on a center line, said viewer (500) being separated by the viewing distance L from the stereoscopic displaying apparatus (100), expressed by $\alpha = \tan^{-1}(h/L)$, the center line being defined as a line extending from the center, in the vertical direction, of the stereoscopic displaying apparatus (100) and being perpendicular to the stereoscopic displaying apparatus (100), and h being the distance from the center of the stereoscopic displaying apparatus (100) to the boundary between the set of adjacent right and left eye image generating regions (162, 164, 361, 362), and

$\theta$ is an angle defined for the stereoscopic display apparatus (100) by which the elevation angle $\alpha$ may vary due to said viewer (502) being off the center line while it is difficult for cross talk due to left/right eye image light incident on the right/left eye polarization regions (181, 182, 381, 382) to occur.

2. The stereoscopic displaying apparatus as set forth in claim 1, wherein the surface of the polarizing plate (170) facing the polarization axis control plate is smooth.

3. The stereoscopic displaying apparatus as set forth in Claim 1, wherein the angle $\theta$ is within $\pm$ 13.5 degrees and a cross talk rate C ($\theta$) is equal to or less than 7%, said cross talk rate C ($\theta$) being defined by the following expressions:

$$C(\theta) = (C_L(\theta)+C_R(\theta))/2 \qquad (2),$$

$$C_L(\theta) = (R_{wL}-B_L)/(L_{wL}-B_L)\times 100\% \qquad (3),$$

$$C_R(\theta) = (L_{wR}-B_R)/(R_{wR}-B_R)\times 100\% \qquad (4),$$

where, $B_L$ is the luminance when the left eye image light is viewed with the angle $\theta$ through the left eye image transmitting section in a case that the right eye image light and the left eye image light are black, $L_{wL}$ is the luminance when the right eye image light and left eye image light are viewed with the angle $\theta$ through the left eye image transmitting section through which the image light emitted from the left eye polarizing region is transmitted in a case that the right eye image light is black and the left eye image light is white, $R_{wL}$ is the luminance when the right eye image light and left eye image light are viewed with the angle $\theta$ through the left eye image transmitting section in a case that the right eye image light is white and the left eye image light is black, $B_R$ is the luminance when the right eye image light and left eye image light are viewed with the angle $\theta$ through the right eye image transmitting section through which the image light emitted from the right eye polarizing region is transmitted in a case that the right eye image light and the left eye image light are black, $L_{wR}$ is the luminance when the right eye image light and left eye image light are viewed with the angle $\theta$ through the right eye image transmitting section in a case that the right eye image light is black and the left eye image light is white, $R_{wR}$ is the luminance when the right eye image light and left eye image light are viewed with the angle $\theta$ through the right eye image transmitting section in a case that the right eye image light is white and the left eye image light is black.

**Patentansprüche**

1. Stereoskopisches Anzeigegerät (100), umfassend:

a) einen Bilderzeugungsabschnitt (160) mit einer Vielzahl von Rechtes-Auge-Bilderzeugungsbereiche (162, 361), durch welche einfallendes Licht ein Rechtes-Auge-Bildlicht wird, und einer Vielzahl von Linkes-Auge-Bilderzeugungsbereiche (164, 362), durch welche einfallendes Licht ein Linkes-Auge-Bildlicht wird, wobei die Rechtes- und Linkes-Auge-Bilderzeugungsbereiche (162, 164, 361, 362) abwechselnd in vertikaler Richtung angeordnet wind, wobei der Bilderzeugungsabschnitt (160) ferner Farbfilter (166) umfasst, die entsprechend den Rechtes- und Linkes-Auge-Bilderzeugungsbereichen (162, 164, 361, 362) angeordnet sind und Licht mit einer bestimmten Wellenlänge durchlassen,

b) eine Polarisierungsplatte (170), die eine Komponente des Rechtes-Auge-Bildlichts und eine Komponente des Linkes-Auge-Bildlichts durchlässt, deren Polarisationsachse parallel zu einer Durchlassachse der Polarisierungsplatte (170) ist, und eine Komponente des Rechtes-Auge-Bildlichts und eine Komponente des Linkes-Auge-Bildlichts abblockt, deren Polarisationsachse parallel zu einer Absorptionsachse der Polarisierungsplatte (170) ist,

c) eine Polarisationsachsensteuerplatte, enthaltend Rechtes-Auge-Polarisierungsbereiche (181, 381) und Linkes-Auge-Polarisierungsbereiche (182, 382), auf die das Rechtes-Auge-Bildlicht bzw. das Linkes-Auge-Bildlicht von der Polarisierungsplatte (170) auftrifft, und von der das Rechtes-Auge-Bildlicht und das Linkes-Auge-Bildlicht als linear polarisierte Lichter, deren Polarisationsachsen orthogonal zueinander sind, oder als zirkular polarisierte Lichter emittiert werden, deren Polarisationsachsen in entgegengesetzten Richtungen zueinander gedreht werden, wobei die Rechtes- und Linkes-Auge-Polarisierungsbereiche (181, 182, 381, 382) abwechselnd in vertikaler Richtung angeordnet sind, und

d) eine Vielzahl von Lichtabblockabschnitten (190, 390), die sich in horizontaler Richtung erstrecken, um das Rechtes- und Linkes-Auge-Bildlicht abzublocken, und eine Vielzahl von Öffnungen (391, 392), die zwischen den Lichtabblockabschnitten (190, 390) ausgebildet sind und das Rechtes- und Linkes-Auge-Bildlicht durchlassen,

**dadurch gekennzeichnet, dass**

e) die Lichtabblockabschnitte (190, 390) auf einer Fläche der Polarisationsachsensteuerplatte angeordnet sind, welche Fläche in einem Abstand (d) zur Polarisierungsplatte (170) weist, welcher der Abstand zwischen den Farbfiltern (166) und den Rechtes-/Linkes-Auge-Polarisierungsbereichen (181, 182, 381, 382) ist, wobei jeder Lichtabblockabschnitt (190, 390) an einer Grenze zwischen einem Rechtes-Auge-Polarisierungsbereich (181, 381) und einem benachbarten Linkes-Auge-Polarisierungsbereich (182, 382) vorgesehen ist, und

f) die Breite w in vertikaler Richtung eines jeden Lichtabblockabschnitts (190, 390) die folgende Gleichung erfüllt:

$$w = d \cdot (\tan(\alpha + \theta) - \tan(\alpha - \theta)) \qquad (1),$$

wobei

d der Abstand zwischen den Farbfiltern (166) und den Rechtes-/Linkes-Auge-Polarisierungsbereichen (181, 182, 381, 382) ist,

$\alpha$ der Elevationswinkel eines Satzes von benachbarten Rechtes- und Linkes-Auge-Bilderzeugungsbereichen (162, 164, 361, 362) ist, entsprechend dem jeweiligen Lichtabblockabschnitt (190, 390), wenn von einem Beobachter (500) auf einer Mittellinie gesehen, wobei der Beobachter (500) um den Sichtabstand L vom stereoskopischen Anzeigegerät (100) abgesondert ist, ausgedrückt durch $\alpha = \tan^{-1}(h/L)$, wobei die Mittellinie als Linie definiert ist, die sich in vertikaler Richtung vom Mittelpunkt des stereoskopischen Anzeigegeräts (100) erstreckt und senkrecht zum stereoskopischen Anzeigegerät (100) verläuft, und h der Abstand vom Mittelpunkt des stereoskopischen Anzeigegeräts (100) zur Grenze zwischen dem Satz von benachbarten Rechtes- und Linkes-Auge-Bilderzeugungsbereichen (162, 164, 361, 362) ist, und

$\theta$ ein für das stereoskopische Anzeigegerät (100) definierter Winkel ist, um den der Elevationswinkel $\alpha$ schwanken kann, weil der Beobachter (500) abseits von der Mittellinie ist, während es schwierig ist, dass Übersprechen infolge von auf die Rechtes-/Linkes-Auge-Polarisierungsbereiche (181, 182, 381, 382) auftreffendem Rechtes-/Linkes-Auge-Bildlicht auftritt.

2. Stereoskopisches Anzeigegerät nach Anspruch 1, wobei die Fläche der Polarisierungsplatte (170), die zur Polarisationsachsensteuerplatte weist, glatt ist.

3. Stereoskopisches Anzeigegerät nach Anspruch 1 wobei der Winkel $\theta$ innerhalb von $\pm$ 13,5 Grad liegt und ein Übersprechungsmaß $C(\theta)$ gleich oder kleiner als 7% ist, wobei das Übersprechungsmaß $C(\theta)$ durch die folgenden Ausdrücke definiert ist:

$$C(\theta) = (C_L(\theta) + C_R(\theta)) / 2 \qquad (2)$$

$$C_L(\theta) = (R_{wL} - B_L) / (L_{wL} - B_L) \times 100\% \qquad (3)$$

$$C_R(\theta) = (L_{wR} - B_R) / (R_{wR} - B_R) \times 100\% \qquad (4)$$

wobei $B_L$ die Luminanz ist, wenn das Linkes-Auge-Bildlicht mit dem Winkel $\theta$ durch den Linkes-Auge-Bilddurchlassabschnitt betrachtet wird, in einem Fall, dass das Rechte-Auge-Bildlicht und das Linkes-Auge-Bildlicht schwarz sind, $L_{WL}$ die Luminanz ist, wenn das Rechtes-Auge-Bildlicht und das Linkes-Auge-Bildlicht mit dem Winkel $\theta$ durch den Linkes-Auge-Bilddurchlassabschnitt betrachtet wird, durch den das vom Linkes-Auge-Polarisierungsbereich emittierte Bildlicht durchgelassen wird, in einem Fall, dass das Rechte-Auge-Bildlicht schwarz ist und das Linkes-Auge-Bildlicht weiß ist, $R_{wL}$ die Luminanz ist, wenn das Rechtes-Auge-Bildlicht und das Linkes-Auge-Bildlicht mit dem Winkel $\theta$ durch den Linkes-Auge-Bilddurchlassabschnitt betrachtet wird, in einem Fall, dass das Rechte-Auge-Bildlicht weiß ist und das Linkes-Auge-Bildlicht schwarz ist, $B_R$ die Luminanz ist, wenn das Rechtes-Auge-Bildlicht und das Linkes-Auge-Bildlicht mit dem Winkel $\theta$ durch den Rechtes-Auge-Bilddurchlassabschnitt betrachtet wird, durch den das vom Rechtes-Auge-Polarisierungsbereich emittierte Bildlicht durchgelassen wird, in einem Fall, dass das Rechte-Auge-Bildlicht und das Linkes-Auge-Bildlicht schwarz sind, $L_{wR}$ die Luminanz ist, wenn das Rechtes-Auge-Bildlicht und das Linkes-Auge-Bildlicht mit dem Winkel $\theta$ durch den Rechtes-Auge-Bilddurchlassabschnitt betrachtet wird, in einem Fall, dass das Rechte-Auge-Bildlicht schwarz ist und das Linkes-Auge-Bildlicht weiß ist, $R_{wR}$ die Luminanz ist, wenn das Rechtes-Auge-Bildlicht und das Linkes-Auge-Bildlicht mit dem Winkel $\theta$ durch den Rechtes-Auge-Bilddurchlassabschnitt betrachtet wird, in einem Fall, dass das Rechte-Auge-Bildlicht weiß ist und das Linkes-Auge-Bildlicht schwarz ist.

## Revendications

1. Appareil de visualisation stéréoscopique (100) comprenant :

a) une section générant des images (160), ladite section ayant une pluralité de régions générant des images de l'oeil droit (162, 361), régions à travers lesquelles une lumière incidente devient une lumière d'image de l'oeil droit, et ayant une pluralité de régions générant des images de l'oeil gauche (164, 362), régions à travers lesquelles une lumière incidente devient une lumière d'image de l'oeil gauche, lesdites régions générant des images de l'oeil droit et de l'oeil gauche (162, 164, 361, 362) qui sont agencées de manière alternée dans la direction verticale, ladite section générant des images (160) comprenant en outre des filtres de couleurs (166) agencés de façon correspondant aux régions générant des images de l'oeil droit et de l'oeil gauche (162, 164, 361, 362) et transmettant une lumière ayant une longueur d'onde particulière,

b) une plaque de polarisation (170) qui transmet un composant de la lumière d'image de l'oeil droit et un composant de la lumière d'image de l'oeil gauche, composants dont l'axe de polarisation est parallèle à un axe de transmission de la plaque de polarisation (170), et qui bloque un composant de la lumière d'image de l'oeil droit et un composant de la lumière d'image de l'oeil gauche, composants dont l'axe de polarisation est parallèle à un axe d'absorption de la plaque de polarisation (170),

c) une plaque de contrôle de l'axe de polarisation, plaque comprenant des régions de polarisation de l'oeil droit (181, 381) et des régions de polarisation de l'oeil gauche (182, 382), régions sur lesquelles sont incidentes, respectivement, la lumière d'image de l'oeil droit et la lumière d'image de l'oeil gauche, lesquelles lumières proviennent de la plaque de polarisation (170), et régions à partir desquelles la lumière d'image de l'oeil droit et la lumière d'image de l'oeil gauche sont émises comme des lumières polarisées linéaires dont les axes de polarisation sont placés de manière orthogonale les uns par rapport aux autres, ou bien émises comme des lumières polarisées, de manière circulaire, dont les axes de polarisation sont en rotation dans des directions opposées entre elles, lesdites régions de polarisation de l'oeil droit et de l'oeil gauche (181, 182, 381, 382) étant agencées de manière alternée dans la direction verticale, et

d) une pluralité de sections de blocage de la lumière (190, 390), sections qui s'étendent dans la direction horizontale pour bloquer la lumière d'image de l'oeil droit et de l'oeil gauche, et comprenant une pluralité d'ouvertures (391, 392) formées entre lesdites sections de blocage de la lumière (190, 390) et permettant de transmettre, à travers ces ouvertures, la lumière d'image de l'oeil droit et de l'oeil gauche,

**caractérisé en ce que**

e) lesdites sections de blocage de la lumière (190, 390) sont agencées sur une surface de la plaque de contrôle de l'axe de polarisation, laquelle surface est tournée vers la plaque de polarisation (170), à une distance (d) qui est la distance comprise entre les filtres de couleurs (166) et les régions de polarisation de l'oeil droit et de l'oeil gauche (181, 182, 381, 382), chacune des sections de blocage de la lumière (190, 390) étant prévue au niveau d'une limite comprise entre une région de polarisation de l'oeil droit (181, 381) et une région de polarisation - adjacente - de l'oeil gauche (182, 382), et

f) la largeur w dans la direction verticale de chacune des sections de blocage de la lumière (190, 390) satisfait l'équation

$$w = d * (\tan(\alpha+\theta) - \tan(\alpha-\theta)) \qquad (1),$$

dans laquelle

d est ladite distance comprise entre les filtres de couleurs (166) et les régions de polarisation de l'oeil droit et de l'oeil gauche (181, 182, 381, 382),

$\alpha$ est cet angle d'élévation d'un ensemble de régions - adjacentes - générant des images de l'oeil droit et de l'oeil gauche (162, 164, 361, 362), qui correspond à la section de blocage respective de la lumière (190, 390), angle tel qu'il est vu sur un axe, par un téléspectateur (500), ledit téléspectateur (500) étant séparé de l'appareil de visualisation stéréoscopique (100) par la distance de vision L, ladite distance étant exprimée par $\alpha = \tan^{-1}(h/L)$, l'axe étant défini comme une ligne s'étendant, dans la direction verticale, à partir du centre de l'appareil de visualisation stéréoscopique (100), et étant perpendiculaire à l'appareil de visualisation stéréoscopique (100), et h est la distance à partir du centre de l'appareil de visualisation stéréoscopique (100), jusqu'à la limite formée entre l'ensemble de régions - adjacentes - générant des images de l'oeil droit et de l'oeil gauche (162, 164, 361, 362), et

$\theta$ est un angle défini pour l'appareil de visualisation stéréoscopique (100) et par lequel l'angle d'élévation $\alpha$ peut varier en raison du fait que ledit téléspectateur (502) est décalé par rapport à l'axe, tandis qu'il est difficile qu'une diaphonie se produise, en raison du fait que la lumière d'image de l'oeil droit et de l'oeil gauche est incidente sur les régions de polarisation de l'oeil droit et de l'oeil gauche (181, 182, 381, 382).

**2.** Appareil de visualisation stéréoscopique selon la revendication 1, dans lequel la surface de la plaque de polarisation (170) tournée vers la plaque de contrôle de l'axe de polarisation est lisse.

**3.** Appareil de visualisation stéréoscopique selon la revendication 1, dans lequel l'angle $\theta$ est dans une plage variant entre $\pm$ 13,5 degrés, et un taux de diaphonie C ($\theta$) est égal ou inférieur à 7 %, ledit taux de diaphonie C ($\theta$) étant défini par les expressions suivantes :

$$C(\theta) = (C_L(\theta) + C_R(\theta)) / 2 \qquad (2),$$

$$C_L(\theta) = (R_{wL} - B_L) / (L_{wL} - B_L) \times 100 \% \qquad (3),$$

$$C_R(\theta) = (L_{wR} - B_R) / (R_{wR} - B_R) \times 100 \% \qquad (4),$$

dans lesquelles $B_L$ est la luminance quand la lumière d'image de l'oeil gauche est vue avec l'angle $\theta$ formé à travers la section de transmission des images de l'oeil gauche, dans le cas où la lumière d'image de l'oeil droit et la lumière d'image de l'oeil gauche sont noires, $L_{wL}$ est la luminance quand la lumière d'image de l'oeil droit et la lumière d'image de l'oeil gauche sont vues avec l'angle $\theta$ formé à travers la section de transmission des images de l'oeil gauche, section à travers laquelle est transmise la lumière d'image émise à partir de la région de polarisation de l'oeil gauche, dans le cas où la lumière d'image de l'oeil droit est noire et où la lumière d'image de l'oeil gauche est blanche, $R_{WL}$ est la luminance quand la lumière d'image de l'oeil droit et la lumière d'image de l'oeil gauche sont vues avec l'angle $\theta$ formé à travers la section de transmission des images de l'oeil gauche, dans le cas où la lumière d'image de l'oeil droit est blanche et où la lumière d'image de l'oeil gauche est noire, $B_R$ est la luminance quand la lumière d'image de l'oeil droit et la lumière d'image de l'oeil gauche sont vues avec l'angle $\theta$ formé à travers la section de transmission des images de l'oeil droit, section à travers laquelle est transmise la lumière d'image émise à partir de la région de polarisation de l'oeil droit, dans le cas où la lumière d'image de l'oeil droit et la lumière d'image de l'oeil gauche sont noires, $L_{wR}$ est la luminance quand la lumière d'image de l'oeil droit et la lumière d'image de l'oeil gauche sont vues avec l'angle $\theta$ formé à travers la section de transmission des images de l'oeil droit, dans le cas où la lumière d'image de l'oeil droit est noire et où la lumière d'image de l'oeil gauche est blanche, $R_{wR}$ est la luminance quand la lumière d'image de l'oeil droit et la lumière d'image de l'oeil gauche sont vues avec l'angle $\theta$ formé à travers la section de transmission des images de l'oeil droit, dans le cas où la lumière d'image de l'oeil droit est blanche et où la lumière d'image de l'oeil gauche est noire.

FIG. 1

F I G . 2

F I G . 3

EP 1 976 306 B1

FIG. 4

FIG. 5

FIG. 6

**EP 1 976 306 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5956001 A